# EUROPEAN PATENT SPECIFICATION

(11) **EP 2 591 007 B1**
(45) Date of publication and mention of the grant of the patent: **08.01.2025**
(21) Application number: 11730401.4
(22) Date of filing: 21.06.2011
(51) Int. Cl.: C08B 1/00, C08J 3/09, D01F 2/02

(54) **PROCESS FOR PRODUCING CELLULOSE SHAPED ARTICLES**
VERFAHREN ZUR HERSTELLUNG EINES CELLULOSEFORMARTIKELS
PROCÉDÉ POUR LA PRODUCTION D'ARTICLES MIS EN FORME EN CELLULOSE

(30) Priority: 07.07.2010 GB 201011444
(43) Date of publication of application: 15.05.2013
(73) Proprietor: Futamura Chemical UK Limited, Cumbria CA7 9BG (GB)
(72) Inventor: COCKROFT, Martin, Wigton Cumbria CA7 9BG (GB); MARSHALL, Colin, Wigton Cumbria CA7 9BG (GB)
(74) Representative: Brand Murray Fuller LLP
(86) International application number: PCT/GB2011/051160
(87) International publication number: WO 2012/004583

(56) References cited:
- EP-A1- 2 062 922
- GB-A- 2 151 632
- US-A1- 2009 084 509
- HUSEMAN E ET AL: "N-ÄTHYL-PYRIDINIUM-CHLORID ALS LÖSUNGSMITTEL UND REAKTIONSMEDIUM FÜR CELLULOSE", MAKROMOLEKULARE CHEMIE, HUTHIG UND WEPF VERLAG, BASEL, CH, vol. 128, no. 1, 17 October 1969 (1969-10-17), pages 288 - 291, XP009073037, ISSN: 0025-116X, DOI: 10.1002/MACP.1969.021280130

## Description

The present invention generally relates to processes for preparing cellulose shaped articles, such as fibres, involving the use of a dope comprising cellulose, ionic liquid and a cosolvent having aprotic character.

Cellulose can be extracted from naturally occurring materials and formed into shaped articles, such as fibres. Cellulose fibres known as rayon fibres have been used in the manufacture of textiles since the beginning of the 20th century.

One of the most commonly used methods of producing cellulose fibres involves dissolving cellulose from wood, cotton, hemp, or other natural sources in alkali and carbon disulfide to make a solution called viscose. This liquid is filtered and refiltered in order to maximise the purity of the material to improve fibre quality. The viscose is then metered through a spinnerette into a bath of dilute sulfuric acid and sodium sulfate to regenerate cellulose from the viscose.

The solvents used in traditional processes for manufacturing rayon fibres are problematic for several reasons. For example, their cost is high. Additionally, their ionic strength is high and steps must be taken to prevent the formation of unwanted byproducts. For example, those solvents may need to be stored and handled in inert environments. Further, the vessels in which those solvents are stored and used must be selected from materials having a high degree of chemical resistance.

Attempts have been made to identify new solvents which can be used to dissolve cellulose. One group of materials which have shown promise in this area are ionic liquids.

EP1458805 discloses processes for dissolving cellulose in dopes comprising ionic liquid and which are substantially free of other materials, especially nitrogen-containing bases, water and other solvents. While cellulose is soluble in the dopes disclosed in EP1458805, those dopes are highly viscous. This high viscosity limits the utility of those dopes in equipment used to dissolve and cast cellulose using the viscose process. Additionally, the dopes disclosed in EP1458805 are preferably free of water and other solvents and thus include a high proportion of costly ionic liquid. For this reason, the cost of preparing cellulose sheets from the dopes disclosed in EP1458805 is relatively high.

US2009/0084509 discloses a process in which dopes comprising ionic liquid and a protic or aprotic cosolvent are employed. Again, cellulose was soluble in those dopes. However, low viscosity levels were only exhibited when a low amount of cellulose was dissolved in those dopes. Further, high temperatures, of over 100°C, were required to bring about the dissolution of cellulose in the dopes exemplified therein. The majority of the dopes exemplified in US2009/0084509 which were reported as exhibiting good rates of cellulose dissolution included ionic liquid as the major constituent. Ideally, the amount of costly ionic liquids used in dopes for cellulose should be reduced. JP2009203467 discloses the dissolution of cellulose in a composition comprising either an ionic liquid containing imidazolium compound and a nitrogen type organic solvent, or an ionic liquid and dimethylsulfoxide.

The present invention seeks to provide an industrial-scale process for the preparation of cellulose shaped articles, such as fibres, in which a dope is employed that requires an acceptably low input of thermal energy to enable the dissolution of cellulose, which utilises a relatively low amount of ionic liquid, which has a sufficiently low viscosity to enable its use with conventional equipment such as viscose manufacturing machinery, which can reliably dissolve significant amounts of cellulose, which can be used to dissolve less refined or less reactive pulps, which are stable without the need for storage in inert atmospheres, and which can be modified to control the density and mechanical properties of cellulose shaped articles.

From the discussion that is to follow, it will become apparent that the present invention addresses some or all of the aforementioned deficiencies while providing numerous additional advantages not hitherto contemplated.

Thus, according to a first aspect of the present invention, there is provided a process for producing cellulose shaped articles in which a) cellulose is at least partly dissolved at a temperature of 70°C or lower in a dope comprising an ionic liquid and a cosolvent to form a cellulose solution comprising 5 to 15 wt.% cellulose, wherein said cosolvent comprises a polar aprotic component and wherein the dope comprises more than 20% to less than 50% ionic liquid by weight of the dope, and wherein the degree of polymerization of the cellulose is less than 700, and b) cellulose shaped articles are cast from the cellulose solution.

The shaped articles which are produced according to the processes of the present invention are most preferably fibres. Other products which may also be formed include ropes, yarns, cloths or cigarette filters. These other products may be formed directly from the cellulose solution, or may be formed from fibres spun from the cellulose solution.

For the avoidance of any doubt, the term 'shaped articles' shall not encompass cellulose sheets, films, laminates or the like.

The dissolution of cellulose preferably takes place in a reaction vessel or chamber. Advantageously, the dope is relatively inert with respect to the materials from which such vessels and tanks are conventionally formed and thus apparatus may be employed that would have been incompatible with traditional cellulose dissolution methods.

The thermal energy necessary to achieve dissolution of the cellulose in the dope may be provided using any means known in the art, including heat exchange apparatus or microwave radiation. While dissolution temperatures of 100°C constitute considerable improvements over the processes of the prior art, the present invention advantageously enables the dissolution of cellulose at temperatures of about 70°C or lower. In preferred embodiments of the present invention, the dissolution temperature ranges from these maxima to minima in the order of about 25°C or higher, about 30°C or higher, about 40°C or higher, about 50°C or higher or about 60°C or higher.

Additionally, the dopes utilised in the processes of the present invention are not generally reactive with air and thus, there is no need to provide an inert gas blanket when those dopes are being stored, handled or used.

In preferred embodiments of the present invention, the cellulose is totally dissolved in the dope. However, functioning embodiments of the invention will be achievable where a proportion of cellulose remains in solid or semi solid form. Depending on the desired properties of the shaped articles which are to be produced, differing amounts of non-dissolved cellulose may be tolerated in the cellulose solution. Additionally, the solid or semi-solid cellulose material can be removed by filtration of the solution prior to the shaped articles being formed. Alternatively, total dissolution can be achieved in the processes of the present invention by increasing the temperature of the solution, preferably to temperatures not higher than 100°C.

The processes of the present invention advantageously make use of dopes which do not necessarily include ionic liquids as the principal constituents in order to exhibit acceptable rates of dissolution. The amount of ionic liquid in the dope is less than 50% by weight of the dope.

In US2009/0084509, dopes consisting of ionic liquid and aprotic solvent in ratios of 20:80 and 50:50 by weight of the dope were reported as being largely incapable of dissolving cellulose at temperatures of 105°C.

It has been found that cellulose can be dissolved at temperatures of 70°C in the dopes used in the processes of the present invention which include 20% and 50% ionic liquid by weight of the dope.

Unexpectedly, it was found that when dopes were used comprising between 20 and 50% ionic liquid by weight of the dope, i.e. more than 20% or less than 50% of the dope, the temperature required to bring about dissolution of cellulose was reduced. In especially preferred embodiments of the present invention, the dope comprises about 25% to about 45% ionic liquid, about 25% to about 40% ionic liquid, or more preferably, about 25% to about 35% ionic liquid by weight of the dope.

In the processes of the present invention, the dope may be prepared and cellulose added thereto. However in an especially preferred embodiment, the cellulose and the polar aprotic component of the cosolvent are premixed prior to being contacted with the ionic liquid to form the dope and cellulose solution. This allows the polar aprotic component, which functions as an interstitial swelling agent, to promote the rapid dissolution of cellulose in the dope.

The cosolvent may consist exclusively or essentially of the polar aprotic component, or may include other materials in amounts sufficient to impart a chemical effect on the dope.

Any polar aprotic component may be included in the dope. Particularly preferred polar aprotic components include dimethyl sulfoxide (DMSO), dimethylacetamide (DMAc), Tetrahydrofuran (THF), dimethylformamide (DMF), formamide, N-methylmorpholine-N-oxide, pyridine, acetone, dioxane, N-methylpyrrolidone, piperyline sulfone and hexamethylphosphoramide or mixtures thereof.

In arrangements where the cosolvent comprises additional components besides the polar aprotic component, any material/s may be included provided that their inclusion in the dope does not adversely affect the solubility of cellulose to the extent that a dissolution temperature of greater than 70°C is required to at least partly dissolve the cellulose.

In a preferred embodiment, a base is included in the dope in addition to the polar aprotic component. The base is preferably organic and may optionally contain heteroatoms. In an especially preferred embodiment, the base is a nitrogen containing base such as ammonia, piperidine, morpholine, diethanolamine or triethanolamine, pyridine, triethylamine or urea. The base may be present in amounts ranging from 1 to 10% by weight of the dope. In especially preferred embodiments, 3% to 8% or 4% to 7% base by weight of the dope is included.

The ionic liquid employed in the processes of the present invention may be any ionic liquid capable of use in the dissolution of cellulose. In especially preferred embodiments, the ionic liquid employed is 1-ethyl-3-methyl imidazolium chloride, 1-ethyl-3-methyl imidazolium acetate (EMIM acetate), 1-butyl-3-methyl imidazolium chloride, 1-allyl-3-methyl imidazolium chloride, zinc chloride/choline chloride, 3-methyl-N-butyl-pyridinium chloride, benzyldimethyl (tetradecyl) ammonium chloride, 1-methylimidazolehydrochloride or mixtures thereof.

When cellulose is dissolved in the dopes employed in the processes of the present invention, the resulting cellulose solutions preferably have a viscosity which is sufficiently comparable to that of traditional viscose solutions to enable existing machinery to be utilised without the need for extensive retooling. In preferred embodiments of the present invention, the cellulose solutions have a viscosity of about 30000 centipoise or lower, preferably within the range of about 30000 to about 4000 centipoise, or about 12000 to about 5000 centipoise. More preferably, the cellulose solutions have a viscosity of less than about 25000, less than about 20000, less than about 15000, less than about 10000, less than about 8000, less than about 6000, less than about 4000, or even about 2000 centipoise or lower.

The degree of polymerisation (DP) of the cellulose starting material employed in the processes of the present invention can affect the temperature at which that cellulose material is at least partly dissolved in the dope. While cellulose materials having lower DP values are generally preferred, cellulose having high DP values can surprisingly be processed in the methods of the present invention. Thus, in preferred embodiments of the present invention, the DP of the cellulose starting material is less than 600, 550, 500, 450 or more preferably 400.

One major advantage of the present invention is that relatively high quantities of cellulose may be processed. In preferred embodiments, proportion of cellulose which is present in the cellulose solution is 8 to 12% or 9 to 10% all by weight of the cellulose solution. For the avoidance of any doubt, when reference is made to the proportion of cellulose present in the cellulose solution, the figure given relates to cellulose which is fully dissolved and also cellulose which is not dissolved or partially dissolved, i.e. the amount of cellulose added into the dope.

The cellulose material employed in the processes of the present invention is preferably in the form of pulp. The pulp may be obtained from any natural source, e.g. wood, cotton, bamboo, straw, etc. The cellulose material may comprise cellulose, hemi cellulose, starch, cellulose acetate or a mixture thereof.

Once a solution of cellulose is obtained, the article forming process may be initiated. The temperature at which the article formation takes place may be the same as the temperature of the solution, or a temperature adjustment step may be performed to increase or decrease the temperature of the cellulose solution to the required level.

The cellulose solution, prior to formation of the shaped article, may be subjected to a filtration step, where the solution is forced through filtration apparatus to remove any impurities or precipitated or non-dissolved material. Thus, the use of solutions in which total dissolution is not achieved is still possible in the processes of the present invention.

Once the cellulose solution has been prepared, it is formed into the required shape. In preferred embodiments, where the shaped articles are cellulose fibres, those fibres are preferably formed by extruding the cellulose solution through a spinnerette, to produce a fibrous material. However, any fibre-forming techniques and apparatus may be employed.

Likewise, in embodiments of the present invention, where cellulose shaped articles other than fibres are prepared from the cellulose solution, the cellulose solution may be moulded, formed or shaped into the desired arrangement using conventional techniques known to those skilled in the art.

Additionally, in embodiments where cellulosic articles are formed from fibres prepared from the cellulose solution, the cellulose fibres may be converted into those articles using any techniques known to those skilled in the art.

The shaped cellulose solution is preferably then transferred into a casting bath including a first casting solution.

In an alternative embodiment, the first casting solution is added to the cellulose solution prior to shaping.

The first casting solution comprises an amount of non-solvent, ideally at least about 70% by weight of the casting solution. In certain embodiments, the balance is made up of a dope mixture, which preferably has essentially the same composition as the dope used to dissolve the cellulose.

The non-solvent brings about the at least partial precipitation of cellulose from the cellulose solution, driving the majority of the dope out of the cellulose solution, and forming cellulose shaped articles, such as fibres.

The dope present in the first casting solution may solely be provided by the cellulose solution or may be added to the first casting solution.

At this stage, the cellulose material may still have a high temperature. There is also an exothermic effect when most ionic liquids are contacted with non-solvents, such as water, and thus cooling means to prevent the temperature of the casting solution from increasing excessively may be employed. The temperature of the casting solution is preferably maintained at about 60°C or lower.

Additionally, it has unexpectedly been found that the properties of shaped articles formed in the processes of the present invention can be controlled by adjusting the temperature of the casting solutions. For example, if low density fibres are to be produced, the temperature of the casting solution should be maintained around 40 to 60°C. If higher density fibres are to be produced, the casting solution should be maintained at a lower temperature, around 20 to 30°C.

The shaped cellulose articles may be contacted with a second casting solution, which contains a higher proportion of non-solvent than the first casting solution, ideally at least about 90%, with the balance comprising a dope mixture that may or may not have the same composition as the dope used to prepare the cellulose solution. As the shaped articles are contacted with this second casting solution, the precipitation of the cellulose from the dope will continue, further reducing the amount of dope present in those articles. Additional casting solutions, each containing an increasing proportion of non-solvent may be used until the cellulose articles contain an acceptably low proportion of dope.

As the shaped cellulose articles are contacted with the casting solution/s, dope will be deposited therein, which will increase the proportion of dope in the casting solutions. To maintain the predetermined proportions of non-solvent in the casting baths, a countercurrent of non-solvent may be fed back through the casting solution/s.

Any substance which elicits the precipitation of cellulose from the dope may be used as a non-solvent in casting solutions of the present invention. In preferred arrangements, the non-solvent is protic and examples of protic materials which may be employed as non-solvents include water, ethanol, methanol, propanol.

The dope may be recovered from the casting baths using any techniques known to those skilled in the art. For example, in an embodiment of the present invention where the dope comprises EMIM acetate as the ionic liquid, DMSO as the polar aprotic component and water as a non-solvent, EMIM acetate may be separated from DMSO and water using thin film evaporation. DMSO and water may then be separated by fractional distillation.

The following examples are intended to illustrate further certain embodiments of the invention and are not limiting in nature. Those skilled in the art will recognise, or be able to ascertain, using no more than routine experimentation, numerous equivalents to the specific examples described herein.

### Comparative Example 1:

A dope was prepared comprising DMSO and EMIM acetate in a ratio of 80:20 by weight of the dope. Cellulose having a degree of polymerisation (DP) of 380 was added in an amount of 9% by weight of the cellulose solution.

The mixture was heated to 90°C and the cellulose was almost completely dissolved after 25 minutes with less than 10 fibres/gram and no lumps or gels were observed. This is surprising given that temperatures of 105°C were required to elicit dissolution of cellulose in similar dopes in US2009/0084509.

On cooling, the solution remained fluid, the ball fall viscosity of the solution was measured over a range of temperatures, the results can be seen below:

| Temperature (°C) | Ball Fall Velocity (s) | Viscosity (cps) |
|---|---|---|
| 20 | 188 | 33,905 |
| 36 | 87 | 15,690 |
| 55 | 36 | 6,492 |
| 74 | 18 | 3,246 |
| 87 | 11 | 1,984 |

### Comparative Example 2

A dope having the same composition as that employed in Example 1 was prepared. The maximum temperature of dissolution was 60°C. After 15 minutes at 60°C, the cellulose was partially dissolved but had a moderately high fibre count. After 60 minutes at 60°C the solution had not changed.

### Comparative Example 3

A dope having the same composition as those employed in Examples 1 and 2 was prepared. The temperature of dissolution was incrementally increased and held for approximately 15 minutes at each stage. At each stage a sample was taken and studied for solution quality and stability. The results are provided below:

| **Temperature (°C)** | **Observations** |
|---|---|
| 50 | The cellulose was partially dissolved, but having a moderately high fibre count and was turbid. The solution gelled upon cooling to room temperature. |
| 60 | The solution had no turbidity but still had a relatively high fibre count. The solution gelled upon cooling to room temperature, but could be made fluid again on re-heating |
| 70 | As per 60°C |
| 75 | The solution remained hazy due to a relatively high fibre count but unlike previous stages, did not gel upon cooling to room temperature. |
| 80 | As per 75°C |
| 85 | At 85°C the solution is completely free from undissolved fibres and stable on cooling to room temperature. At these conditions no filtration would be required. |
| 90 | As per 85°C |

The results of this test illustrates that a dope comprising only 20% ionic liquid by weight of the dope can retain significant amounts of cellulose in solution at relatively low temperatures.

### Comparative Example 4

A dope was prepared comprising DMSO and EMIM acetate in a ratio of 50:50 by weight of the dope. Cellulose having a degree of polymerisation (DP) of 380 was added in an amount of 9% by weight of the cellulose solution.

It was noted that the viscosity of the solutions formed from a dope having a weight ratio of DMSO to EMIM acetate of 50:50 was higher than that of the solutions recited in the preceding examples. It is believed that this increase in viscosity arises as a result of the increase in the proportion of ionic liquid and/or the reduction in swelling of the cellulose, as a result of the lower proportion of DMSO which was employed. Again, the viscosity of the solution was measured across a range of temperatures:

| Temperature (°C) | Ball Fall Velocity (s) | Viscosity (cps) |
|---|---|---|
| 20 | 698 | 125,880 |
| 38 | 270 | 48,693 |
| 55 | 128 | 23,084 |
| 73 | 49 | 8, 837 |
| 93 | 27 | 4,869 |

These results demonstrate that an increase in the proportion of ionic liquid present results in an increase in viscosity. However, the obtained viscosity values are still comparable to those observed in traditional viscose solutions, meaning that the exemplified solutions should be suitable for use in viscose processing equipment.

### Example 5

A dope was prepared comprising DMSO and EMIM acetate in a ratio of 60:40 by weight of the dope. A quantity of cellulose having a degree of polymerisation (DP) of 380 was added in an amount of 9% by weight of the cellulose solution.

Ball fall viscosity measurements were taken over a range of temperatures and the results are provided below:

| Temperature (°C) | Ball Fall Velocity (s) | Viscosity (cps) |
|---|---|---|
| 20 | 485 | 87,467 |
| 33 | 229 | 41,299 |
| 45 | 96 | 17,313 |
| 55 | 65 | 11,722 |
| 74 | 34 | 3,132 |
| 93 | 17 | 3,066 |

### Example 6

A dope was prepared comprising DMSO and EMIM acetate in a ratio of 70:30 by weight of the cellulose. A quantity of cellulose having a degree of polymerisation (DP) of 380 was added in an amount of 9% by weight of the cellulose solution.

The temperature of dissolution was incrementally increased and held for approximately 15 minutes at each stage. At each stage a sample was taken and studied for solution quality and stability. The results are provided below:

| **Temperature (°C)** | **Observations** |
|---|---|
| 40 | The cellulose was almost totally dissolved, with few small fibres still present and a slightly hazy solution, on cooling to room temperature the solution remained fluid and stable, but would require filtration prior to fibre formation. |
| 50 | As per 40°C |
| 55 | At 55°C the solution is completely free from un-dissolved fibres and stable/fluid on cooling to room temperature, at these conditions no filtration would be required |

These results show the surprising reduction in cellulose dissolution temperatures when the process of the present invention is employed. Total dissolution was observed after 45 minutes at only 55°C.

Ball fall measurements were taken over a range of temperatures the results of which are provided below:

| Temperature (°C) | Ball Fall Velocity (s) | Viscosity (cps) |
|---|---|---|
| 20 | 308 | 55,546 |
| 36 | 115 | 20,740 |
| 55 | 51 | 9,198 |
| 74 | 24 | 4,328 |
| 93 | 12 | 2,164 |

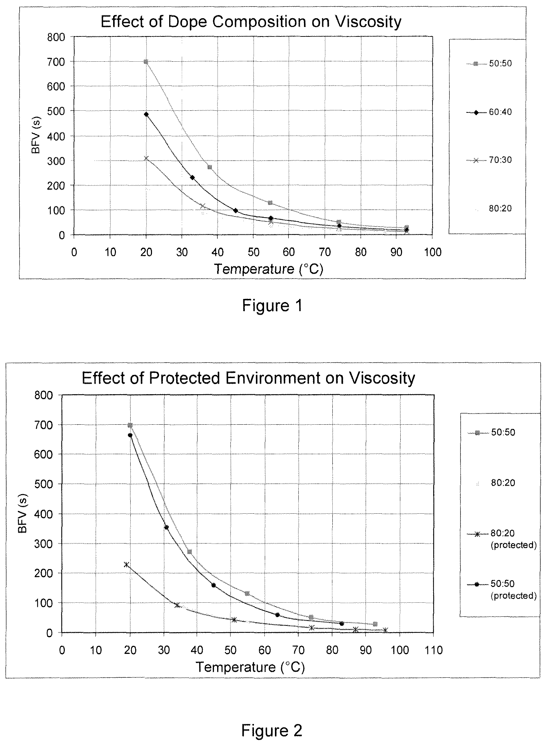

A chart illustrating the ball fall velocities reported in Examples 1, 4, 5 and 6 is provided as Figure 1.

### Example 7

A dope was prepared comprising DMSO and EMIM acetate in a ratio of 75:25 by weight of the dope. A quantity of cellulose having a degree of polymerisation (DP) of 380 was added in an amount of 9% by weight of the cellulose solution. The temperature of dissolution was incrementally increased and held for approximately 15 minutes at each stage. At each stage a sample was taken and studied for solution quality and stability. The results are provided below:

| **Temperature (°C)** | **Observations** |
|---|---|
| 40 | The solution had no turbidity but still had a relatively high fibre count, and gelled upon cooling to room temperature |
| 50 | As per 40°C |
| 60 | The solution remained hazy due to a moderately high fibre count. Unlike previous stages, the solution did not gel upon cooling to room temperature. |
| 70 | At 70°C the solution is completely free from undissolved fibres and is stable on cooling to room temperature. |

### Comparative Example 8

Tests were performed to investigate the stability of cellulose solutions employed in some of the processes described above.

Those solutions comprised dopes having a ratio of DMSO to EMIM acetate of 80:20 and 50:50 by weight of the dope. A quantity of cellulose having a degree of polymerisation (DP) of 380 was included in the solution in an amount of 9% by weight of the cellulose solution.

Ball fall velocity measurements were then made in these solutions at varying temperatures in both an ambient atmospheric environment (i.e. in the presence of air) and in a protected environment. The protected environment was established by providing a blanket of nitrogen and a vacuum. The results of these measurements are provided in Figure 2.

While the ball fall test is used to measure the viscosity of a liquid, viscosity also provides a useful indication of the stability of dopes and cellulose solutions. As can be seen from the chart in Figure 2, the effect that the protected environment had on ball fall velocity was negligible. Accordingly, this suggests that the dopes can be stored, handled and used without the need to provide an inert atmosphere.

### Example 9

A solution having the composition recited in Example 6 above was prepared. The viscosity of that solution at 55°C was measured and the ball fall velocity was 50 seconds.

The solution was stored in an oven at 55°C under ambient atmospheric conditions and the viscosity was measured after 11 days and 23 days. After 11 days, no reduction in viscosity was observed. After 23 days, the viscosity had reduced to 48 seconds. Thus, it appears that the solutions employed in the processes of the present invention exhibit only a minor degree of thermal degradation, especially when compared to a pure ionic-liquid dope, and are therefore suitable for repeated use in the formation of cellulose shaped articles.

### Example 10

It had been noted that the rate of oxidation of pure ionic liquid solutions undergoing high shear blending under ambient atmospheric conditions was unacceptably high. To minimise oxidation, it had been necessary to remove oxygen from the environment prior to the initiation of high-shear mixing.

To investigate whether the solutions employed in the processes of the present invention were susceptible to oxidation during high-shear mixing, a solution was prepared having the same composition as that outlined in Example 6 above.

The viscosity of the solution was measured at 60°C and found to be 43 seconds (ball fall velocity). The solution was stirred at 2000rpm for three hours under a nitrogen blanket, to exclude the presence of oxygen. The temperature of the solution was maintained at 60°C. As expected, the viscosity of the solution was unchanged.

The same procedure was repeated, except that the solution was stirred for three hours under ambient atmospheric conditions. Surprisingly, the viscosity of the solution was unchanged.

These tests were repeated at 90°C and the outcome was the same, i.e. the solutions employed in the processes of the present invention were not susceptible to oxidation when stirred under high-shear conditions.

### Example 11

Tests were performed to investigate the effect of varying amounts of cellulose on the viscosity of the solutions employed in the processes of the present invention. Solutions including cellulose and a dope were prepared. The dope consisted of DMSO and EMIM acetate in a ratio of 70:30 by weight of the dope. The solution included cellulose in concentrations ranging from 9.0 to 9.9% by weight of the cellulose solution.

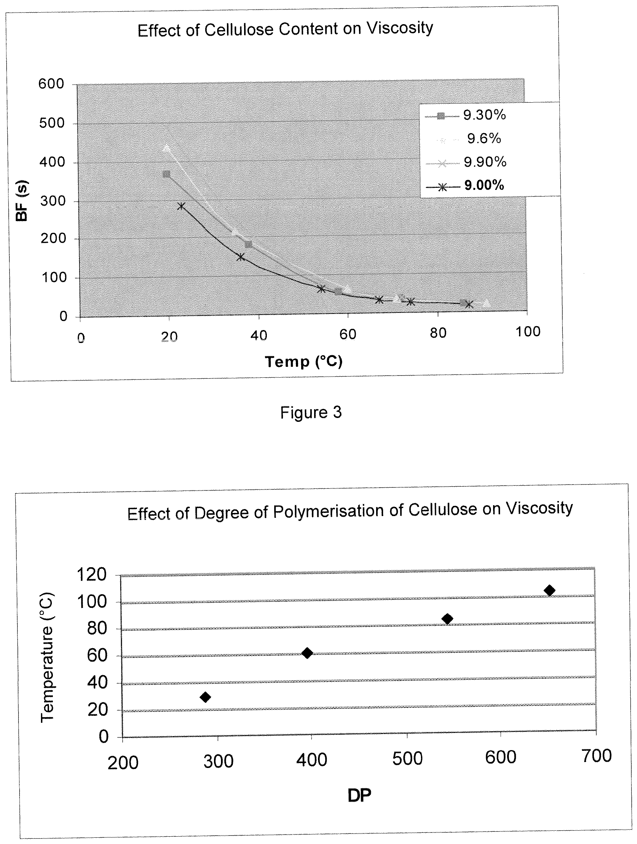

Ball fall velocity viscosity measurements were made in each of these solutions across a range of temperatures. Those measurements are provided in Figure 3.

As can be seen from that chart, at lower temperatures, the proportion of cellulose included in the solution has a notable effect on viscosity. However, as temperatures are increased, the effect on viscosity of cellulose concentration becomes increasingly negligible in the solutions employed in the processes of the present invention.

### Example 12

Tests were performed to investigate the effect of the degree of polymerisation (DP) of cellulose on the viscosity of the solutions employed in the processes of the present invention.

Solutions including cellulose and a dope were prepared. The dopes consisted of DMSO and EMIM acetate in a ratio of 70:30 by weight of the dope. The solutions included 9.0% cellulose by weight of the cellulose solution. The solutions varied in terms of the DP of the cellulose.

For each of the solutions, the temperature necessary to achieve a viscosity of 50 seconds (ball fall velocity) was determined and the results are provided in Figure 4.

While the use of cellulose having a low DP (e.g. 300-400) is preferred, as a low viscosity solution can be obtained at a relatively low temperature, the results shown in Figure 4 confirm that cellulose having a higher DP, which may have been unsuitable for use in conventional ionic liquid dopes, can be dissolved with only a slight increase in dissolution temperature.

### Example 13

The effect of casting bath temperature on cellulose quality and structure was investigated by preparing a cellulose solution including cellulose and a dope. The dope consisted of DMSO and EMIM acetate in a ratio of 70:30 by weight of the dope. The cellulose solution included 9.0% cellulose by weight of the cellulose solution.

The cellulose solution was cast, using a glass plate and a casting blade, into baths of pure water which each had different temperatures ranging from 20°C to 50°C. The resulting films were analysed and the following observations were made:

| Casting Solution Temperature (°C) | Density of Film | Comments |
|---|---|---|
| 20 | 1.64 | A clear wet gel was formed, which upon drying produced a film which was crystal clear and glossy. |
| 30 | 1.5 | The formed wet gel was slightly more opaque although it dried clear. The resulting film was slightly less glossy than the film produced in the 20°C casting solution. |
| 40 | / | As for 30°C. |
| 50 | 1.41 | The wet gel was very opaque and hazy and remained so upon drying. |

Thus, it has been found that the density of cellulose films can be controlled by adjusting the temperature of the solution. Although the processes of the present invention result in the preparation of shaped articles such as fibres and not films, it appears likely that the temperature of the casting bath/s will have the same effect on fibre density.

The temperature of the cellulose solution which is passed into the casting solution/s is likely to have a temperature greater than 50°C. Further, with most ionic liquids and non-solvents, an exothermic reaction occurs when they are contacted. Accordingly, steps should be taken to ensure that the temperature of the casting solution/s is maintained at the predetermined level.

## Claims

1. A process for producing cellulose shaped articles in which:
a) cellulose is at least partly dissolved at a temperature of 70°C or lower in a dope comprising an ionic liquid and a cosolvent to form a cellulose solution comprising 5 to 15 wt.% cellulose, wherein said cosolvent comprises a polar aprotic component and wherein the dope comprises more than 20% to less than 50% ionic liquid by weight of the dope, and
wherein the degree of polymerisation of the cellulose is less than 700, and
b) cellulose shaped articles are cast from the cellulose solution.

2. The process of Claim 1, wherein the shaped articles are fibres, optionally wherein the process further comprises:
c) forming the cellulose fibres produced in step b) into an article; and optionally wherein the article is a rope, yarn, cloth or cigarette filter.

3. The process of Claim 1, wherein the shaped articles are ropes, yarns, cloths or cigarette filters.

4. The process of any one of Claims 1 to 3
wherein step a) and/or step b) are performed under ambient atmospheric conditions.

5. The process of any one of Claims 1 to 4, wherein the dope comprises between 25 to 45% ionic liquid by weight of the dope, optionally 25 to 40% ionic liquid by weight of the dope, optionally 25 to 35% ionic liquid by weight of the dope.

6. The process of any one of Claims 1 to 5, wherein the cellulose and the polar aprotic component are pre-mixed prior to formation of the dope.

7. The process of any one of Claims 1 to 6, wherein the cosolvent consists exclusively or essentially of the polar aprotic component; and/or
wherein the polar aprotic component is selected from the group consisting of dimethyl sulfoxide (DMSO), tetrahydrofuran (THF), dimethylacetamide (DMAc), dimethylformamide (DMF), N-methylmorpholineoxide, pyridine, acetone, dioxane, N-methylpyrrolidone, piperyline sulfone and hexamethylphosphoramide or mixtures thereof.

8. The process of any one of Claims 1 to 7, wherein the dope comprises a base, optionally wherein the base is a nitrogen containing base, which may be selected from the group consisting of pyridine, ammonia, piperidine, morpholine, diethanolamine or triethanolamine, triethylamine, urea or mixtures thereof, optionally wherein the base is present in an amount of 1 to 10% by weight of the dope, optionally 3 to 8% by weight of the dope.

9. The process of any one of Claims 1 to 8, wherein the ionic liquid is selected from the group consisting of 1-ethyl-3-methyl imidazolium chloride, 1-ethyl-3-methyl imidazolium acetate (EMIM acetate), 1-butyl-3-methyl imidazolium chloride, 1-allyl-3-methyl imidazolium chloride, zinc chloride/choline chloride, 3-methyl-N-butyl-pyridinium chloride, benzyldimethyl (tetradecyl) ammonium chloride, 1-methylimidazolehydrochloride or mixtures thereof.

10. The process of any one of Claims 1 to 9, wherein the degree of polymerisation of the cellulose is 500 or lower, optionally 400 or lower.

11. The process of any one of Claims 1 to 10, wherein the cellulose solution comprises 8 to 12% cellulose by weight of the cellulose solution; and/or
wherein the cellulose solution is filtered prior to step b); and/or
wherein the cellulose solution obtained in step a) is shaped prior to step b).

12. The process of any one of Claims 1 to 11 wherein step b) comprises contacting the cellulose solution with a first casting solution comprising a non-solvent to produce regenerated cellulose shaped articles, optionally wherein the non-solvent is water and further, optionally wherein the first casting solution is maintained at a temperature of 60°C or lower, optionally at a temperature of 35°C or lower.

13. The process of Claim 12, wherein the first casting solution comprises 70% or higher of non-solvent by weight of the first casting solution; and/or
wherein the first casting solution comprises a dope mixture comprising ionic liquid and a cosolvent, the cosolvent comprising a polar aprotic component, optionally wherein the dope mixture has essentially the same composition as the dope in which cellulose is at least partly dissolved in step a) of Claim 1.

14. The process of Claim 12 or Claim 13, wherein the regenerated cellulose shaped articles are removed from the first casting solution and contacted with a second casting solution, said second casting solution comprising a higher proportion of non-solvent than said first casting solution; and/or
wherein the proportion of non-solvent present in the first and second casting solutions is maintained by the provision of a countercurrent flow of non-solvent to the first and second casting solutions.

15. The process of any one of Claims 12 to 14, wherein ionic liquid is recovered from the first and/or second casting solutions by removing a portion of said first and/or second casting solutions and performing thin film evaporation to extract ionic liquid therefrom to leave a mixture of non-solvent and cosolvent from the dope, optionally wherein the cosolvent is recovered from the mixture of non-solvent and cosolvent using fractional distillation.

## Patentansprüche

1. Verfahren zur Erzeugung von Celluloseformartikel, wobei:
a) Cellulose zumindest teilweise bei einer Temperatur von 70 °C oder weniger in einer Spinnlösung gelöst wird, die eine ionische Flüssigkeit und ein Cosolvens umfasst, um eine Celluloselösung zu bilden, die 5 bis 15 Gew.-% Cellulose umfasst, wobei das Cosolvens eine polare aprotische Komponente umfasst, und wobei die Spinnlösung mehr als 20 % bis weniger als 50 % ionische Flüssigkeit bezogen auf das Gewicht der Spinnlösung umfasst, und
wobei der Polymerisationsgrad der Cellulose kleiner als 700 ist, und
b) Celluloseformartikel aus der Celluloselösung gegossen werden.

2. Verfahren nach Anspruch 1, wobei die Formartikel Fasern sind, wobei das Verfahren optional ferner Folgendes umfasst:
c) Formen der in Schritt b) erzeugten Cellulosefasern zu einem Artikel; und
wobei optional der Artikel ein Seil, Garn, Tuch oder Zigarettenfilter ist.

3. Verfahren nach Anspruch 1, wobei die Formartikel Artikel Seile, Garne, Tücher oder Zigarettenfilter sind.

4. Verfahren nach einem der Ansprüche 1 bis 3,
wobei Schritt a) und/oder Schritt b) unter atmosphärischen Umgebungsbedingungen durchgeführt werden.

5. Verfahren nach einem der Ansprüche 1 bis 4, wobei die Spinnlösung zwischen 25 bis 45 Gew.-% ionische Flüssigkeit, optional 25 bis 40 Gew.-% ionische Flüssigkeit, optional 25 bis 35 Gew.-% ionische Flüssigkeit bezogen auf das Gewicht der Spinnlösung umfasst.

6. Verfahren nach einem der Ansprüche 1 bis 5, wobei die Cellulose und die polare aprotische Komponente vor der Bildung der Spinnlösung vorgemischt werden.

7. Verfahren nach einem der Ansprüche 1 bis 6, wobei das Cosolvens ausschließlich oder im Wesentlichen aus der polaren aprotischen Komponente besteht; und/oder
wobei die polare aprotische Komponente aus der Gruppe ausgewählt ist, die besteht aus Dimethylsulfoxid (DMSO), Tetrahydrofuran (THF), Dimethylacetamid (DMAc), Dimethylformamid (DMF), N-Methylmorpholinoxid, Pyridin, Aceton, Dioxan, N-Methylpyrrolidon, Piperylinsulfon und Hexamethylphosphorsäuretriamid oder Mischungen davon.

8. Verfahren nach einem der Ansprüche 1 bis 7, wobei die Spinnlösung eine Base umfasst, wobei die Base gegebenenfalls eine stickstoffhaltige Base ist, die aus der Gruppe ausgewählt sein kann, die aus Pyridin, Ammoniak, Piperidin, Morpholin, Diethanolamin oder Triethanolamin, Triethylamin, Harnstoff oder Mischungen davon besteht, wobei die Base gegebenenfalls in einer Menge von 1 bis 10 Gew.-% der Spinnlösung, gegebenenfalls 3 bis 8 Gew.-% der Spinnlösung, vorhanden ist.

9. Verfahren nach einem der Ansprüche 1 bis 8, wobei die ionische Flüssigkeit ausgewählt ist aus der Gruppe, bestehend aus 1-Ethyl-3-methylimidazoliumchlorid, 1-Ethyl-3-methylimidazoliumacetat (EMIM-Acetat), 1-Butyl-3-methylimidazoliumchlorid, 1-Allyl-3-methylimidazoliumchlorid, Zinkchlorid/Cholinchlorid, 3-Methyl-N-butylpyridiniumchlorid, Benzyldimethyl (tetradecyl) Ammoniumchlorid, 1-Methylimidazolhydrochlorid oder Mischungen davon.

10. Verfahren nach einem der Ansprüche 1 bis 9, wobei der Polymerisationsgrad der Cellulose 500 oder weniger, optional 400 oder weniger beträgt.

11. Verfahren nach einem der Ansprüche 1 bis 10, wobei die Celluloselösung 8 bis 12 Gew.-% Cellulose bezogen auf das Gewicht der Celluloselösung umfasst; und/oder
wobei die Celluloselösung vor Schritt b) filtriert wird; und/oder
wobei die in Schritt a) erhaltene Celluloselösung vor Schritt b) geformt wird.

12. Verfahren nach einem der Ansprüche 1 bis 11, wobei Schritt b) das Inkontaktbringen der Celluloselösung mit einer ersten Gießlösung umfasst, die ein Nichtlösungsmittel umfasst, um regenerierte Celluloseformartikel zu erzeugen, wobei das Nichtlösungsmittel optional Wasser ist und wobei ferner optional die erste Gießlösung bei einer Temperatur von 60 °C oder weniger, optional bei einer Temperatur von 35 °C oder weniger gehalten wird.

13. Verfahren nach Anspruch 12, wobei die erste Gießlösung 70 % oder mehr Nicht-Lösungsmittel, bezogen auf das Gewicht der ersten Gießlösung, umfasst; und/oder
wobei die erste Gießlösung eine Spinnlösungsmischung umfasst, die ionische Flüssigkeit und ein Cosolvens umfasst, wobei das Cosolvens eine polare aprotische Komponente umfasst, wobei die Spinnlösungsmischung optional im Wesentlichen die gleiche Zusammensetzung wie die Spinnlösung aufweist, in der Cellulose in Schritt a) des Anspruchs 1 zumindest teilweise gelöst ist.

14. Verfahren nach Anspruch 12 oder 13, wobei die Formartikel aus regenerierter Cellulose aus der ersten Gießlösung entfernt und mit einer zweiten Gießlösung in Kontakt gebracht werden, wobei die zweite Gießlösung einen höheren Anteil an Nichtlösungsmittel als die erste Gießlösung umfasst; und/oder wobei der Anteil an Nichtlösungsmittel, der in der ersten und der zweiten Gießlösung vorhanden ist, durch das Bereitstellen eines Gegenstroms von Nichtlösungsmittel zu der ersten und der zweiten Gießlösung aufrechterhalten wird.

15. Verfahren nach einem der Ansprüche 12 bis 14, wobei ionische Flüssigkeit aus der ersten und/oder zweiten Gießlösung gewonnen wird, indem ein Teil der ersten und/oder zweiten Gießlösung entfernt wird und eine Dünnschichtverdampfung durchgeführt wird, um ionische Flüssigkeit daraus zu extrahieren, um eine Mischung aus Nichtlösungsmittel und Cosolvens aus der Spinnlösung zu hinterlassen, wobei optional das Cosolvens aus der Mischung aus Nichtlösungsmittel und Cosolvens unter Verwendung einer fraktionierten Destillation gewonnen wird.

## Revendications

1. Procédé de production d'articles façonnés en cellulose dans lequel :
a) la cellulose est au moins partiellement dissoute à une température de 70°C ou moins dans une solution de dopage comprenant un liquide ionique et un cosolvant pour former une solution de cellulose comprenant de 5 à 15 % en poids de cellulose, dans lequel ledit cosolvant comprend un composant aprotique polaire et dans lequel la solution de dopage comprend de plus de 20 % à moins de 50 % de liquide ionique en poids de la solution de dopage, et
dans lequel le degré de polymérisation de la cellulose est inférieur à 700, et
b) les articles façonnés en cellulose sont coulés à partir de la solution de cellulose.

2. Procédé selon la revendication 1, dans lequel les articles façonnés sont des fibres, facultativement dans lequel le procédé comprend en outre :
c) la formation des fibres de cellulose produites à l'étape b) en un article ; et
facultativement dans lequel l'article est une corde, un fil, un tissu ou un filtre de cigarette.

3. Procédé selon la revendication 1, dans lequel les articles façonnés sont des cordes, des fils, des tissus ou des filtres de cigarettes.

4. Procédé selon l'une quelconque des revendications 1 à 3
dans lequel l'étape a) et/ou l'étape b) sont effectuées dans des conditions atmosphériques ambiantes

5. Procédé selon l'une quelconque des revendications 1 à 4, dans lequel la solution de dopage comprend entre 25 et 45 % de liquide ionique en poids de la solution de dopage, facultativement 25 à 40 % de liquide ionique en poids de la solution de dopage, facultativement 25 à 35 % de liquide ionique en poids de la solution de dopage.

6. Procédé selon l'une quelconque des revendications 1 à 5, dans lequel la cellulose et le composant aprotique polaire sont prémélangés avant la formation de la solution de dopage.

7. Procédé selon l'une quelconque des revendications 1 à 6, dans lequel le cosolvant est constitué exclusivement ou essentiellement du composant aprotique polaire ; et/ou
dans lequel le composant aprotique polaire est choisi dans le groupe constitué par le diméthylsulfoxyde (DMSO), le tétrahydrofurane (THF), le diméthylacétamide (DMAc), le diméthylformamide (DMF), le N-méthylmorpholineoxyde, la pyridine, l'acétone, le dioxane, la N-méthylpyrrolidone, la pipéryline sulfone et l'hexaméthylphosphoramide ou des mélanges de ceux-ci.

8. Procédé selon l'une quelconque des revendications 1 à 7, dans lequel la solution de dopage comprend une base, facultativement dans lequel la base est une base contenant de l'azote, qui peut être choisie dans le groupe constitué par la pyridine, l'ammoniac, la pipéridine, la morpholine, la diéthanolamine ou la triéthanolamine, la triéthylamine, l'urée ou des mélanges de celles-ci, facultativement dans lequel la base est présente en une quantité de 1 à 10 % en poids de la solution de dopage, facultativement 3 à 8 % en poids de la solution de dopage.

9. Procédé selon l'une quelconque des revendications 1 à 8, dans lequel le liquide ionique est choisi dans le groupe constitué par le chlorure de 1-éthyl-3-méthyl imidazolium, l'acétate de 1-éthyl-3-méthyl imidazolium (acétate d'EMIM), le chlorure de 1-butyl-3-méthyl imidazolium, le chlorure de 1-allyl-3-méthyl imidazolium, le chlorure de zinc/chlorure de choline, le chlorure de 3-méthyl-N-butyl-pyridinium, le chlorure de benzyldiméthyl (tétradécyl) ammonium, le chlorhydrate de 1-méthylimidazole ou des mélanges de ceux-ci.

10. Procédé selon l'une quelconque des revendications 1 à 9, dans lequel le degré de polymérisation de la cellulose est de 500 ou moins, éventuellement de 400 ou moins.

11. Procédé selon l'une quelconque des revendications 1 à 10, dans lequel la solution de cellulose comprend 8 à 12 % de cellulose en poids de la solution de cellulose ; et/ou
dans lequel la solution de cellulose est filtrée avant l'étape b) ; et/ou
dans lequel la solution de cellulose obtenue à l'étape a) est mise en forme avant l'étape b).

12. Procédé selon l'une quelconque des revendications 1 à 11, dans lequel l'étape b) comprend la mise en contact de la solution de cellulose avec une première solution de coulée comprenant un non-solvant pour produire des articles façonnés en cellulose régénérée, facultativement dans lequel le non-solvant est de l'eau et en outre, facultativement dans lequel la première solution de coulée est maintenue à une température de 60°C ou moins, facultativement à une température de 35°C ou moins.

13. Procédé selon la revendication 12, dans lequel la première solution de coulée comprend 70 % ou plus de non-solvant en poids de la première solution de coulée ; et/ou
dans lequel la première solution de coulée comprend un mélange de solution de dopage comprenant un liquide ionique et un cosolvant, le cosolvant comprenant un composant aprotique polaire, facultativement dans lequel le mélange de solution de dopage a essentiellement la même composition que la solution de dopage dans laquelle la cellulose est au moins partiellement dissoute dans l'étape a) de la revendication 1.

14. Procédé selon la revendication 12 ou la revendication 13, dans lequel les articles façonnés en cellulose régénérée sont retirés de la première solution de coulée et mis en contact avec une seconde solution de coulée, ladite seconde solution de coulée comprenant une proportion plus élevée de non-solvant que ladite première solution de coulée ; et/ou dans lequel la proportion de non-solvant présent dans les première et seconde solutions de coulée est maintenue par la fourniture d'un flux à contre-courant de non-solvant aux première et seconde solutions de coulée.

15. Procédé selon l'une quelconque des revendications 12 à 14, dans lequel le liquide ionique est récupéré à partir de la première et/ou de la seconde solutions de coulée en éliminant une partie de ladite première et/ou de ladite seconde solutions de coulée et en effectuant une évaporation en couche mince pour en extraire le liquide ionique afin de laisser un mélange de non-solvant et de cosolvant à partir de la solution de dopage, facultativement dans lequel le cosolvant est récupéré à partir du mélange de non-solvant et de cosolvant en utilisant une distillation fractionnée.
